# EUROPEAN PATENT SPECIFICATION

(11) **EP 1 115 047 B1**
(45) Date of publication and mention of the grant of the patent: **29.01.2003**
(21) Application number: 00111068.3
(22) Date of filing: 02.06.2000
(51) Int. Cl.: G05D 7/06, B24C 7/00

(54) **Device for monitoring and adjusting the flow-rate of an abrasive mixture for gang saws for cutting granite, stone or the like**
Einrichtung zum Überwachen und Einstellen der Durchflussmenge eines Abrasivgemisches für Gattersägen zum Schneiden von Granit, Gestein oder dergleichen
Dispositif de surveillance et d'ajustement du débit d'un mélange abrasif pour des scies à cadre destinées à la coupe de granit, de pierre ou de matériaux similaires

(30) Priority: 21.12.1999 IT MI992677
(43) Date of publication of application: 11.07.2001
(73) Proprietor: Perissinotto S.p.A., 20121 Milano (IT)
(72) Inventor: Perissinotto, Enrico, Milano (IT)
(74) Representative: Modiano, Guido, Dr.-Ing.

(56) References cited:
- CH-A- 678 610
- DE-A- 4 422 769
- FR-A- 2 574 521
- FR-A- 2 673 564

## Description

The present invention relates to a device for monitoring and adjusting the flow-rate of an abrasive mixture for gang saws for cutting granite, stone or the like.

It is known that gang saws for cutting granite, stone or stone-like materials in general are provided with blades which, in order to cut the block of granite or the like, must work in combination with an abrasive mixture generally composed of water, dust of the material being cut, lime, steel shot and optional additives. This abrasive mixture is fed constantly to the work area of the blade by means of a pump which generally draws, with its intake duct, in a pit in which the abrasive mixture is collected and which supplies, by means of its delivery duct, a distribution system known as "mechanical carriage" whereby the mixture is delivered in the blade work area.

Control of the properties of the abrasive mixture, particularly its viscosity and relative density, is performed by means of specific devices which vary the percentages of its components by means of dosage devices and also control intervals for washing the cutting region.

The need is felt, in these machines, to be able to monitor and vary rather precisely the flow-rate of the abrasive mixture that is dispensed in the cutting region in order to be able to deliver an amount of abrasive mixture which, for example according to the material being cut, to the penetration of the blades in the block of material, to the number of blades or to the thicknesses of the slabs to be obtained, achieves optimum operation of the gang saw.

It should also be noted that the hydraulic efficiency of the pump, owing to the fact that the abrasive mixture causes a rather rapid wear of this component of the system, significantly deteriorates over time and therefore in order to ensure on the average a sufficient flow-rate it is customary to operate the pump so that at the beginning of its life it delivers a flow-rate in excess of the one actually required. This solution, however, has the effect of shortening the life of the pump.

Currently, in order to adjust the flow-rate of the abrasive mixture, a throttling valve arranged on the delivery duct of the pump is used, or the flow of abrasive mixture that is deemed in excess is spilled into the collection pit, or the speed of the motor that drives the pump is varied.

However, these adjustments are performed empirically, i.e., without knowing the actual flow-rate of abrasive mixture that is delivered and therefore seldom allow to achieve fully satisfactory results.

The German patent application No DE 44 22 769 A1 discloses a flowmeter for measuring the abrasive flow in a suction pipe of a water jet cutting device. The Swiss patent No 678 610 A5 discloses a pump for supplying an abrasive mixture to saw wires.

The aim of the present invention is to solve the above problem, by providing a device which allows to monitor and automatically adjust the flow-rate of the abrasive mixture for gang saws for cutting granite, stone or the like, so as to achieve optimum operation of the gang saw whereto said device is applied.

Within the scope of this aim, an object of the invention is to provide a device which allows to constantly monitor the flow-rate of abrasive mixture that is actually delivered and to vary said flow-rate in order to make it equal to a preset theoretical value which is optimum as a function of the parameters that influence the operation of the gang saw, such as for example the material being cut, the penetration of the blades into the block of material, the number of blades or the thicknesses of the slabs to be obtained, etcetera.

Another object of the invention is to provide a device which can be installed simply and easily in currently commercially available gang saws.

Another object of the invention is to provide a device which, by avoiding unnecessary overloading of the pump, achieves a longer life thereof.

This aim, these objects and others which will become better apparent hereinafter are achieved by a device for monitoring and adjusting the flow-rate of the abrasive mixture for gang saws for cutting granite, stone or the like, comprising a flowmeter applied to the delivery duct of the pump that feeds the abrasive mixture of the gang saw, an electronic monitoring and actuation element which is connected, by means of one of its inputs, to said flowmeter and is suitable to compare the value of the flow-rate measured by said flowmeter with a preset theoretical value, an element for varying the flow-rate of mixture pumped along said delivery duct, which is operatively connected to said monitoring and actuation device; said monitoring and actuation device intervening, outside a presettable tolerance range, on said flow-rate variation element in the presence of a difference between the value of the flow-rate measured by said flowmeter and said preset theoretical value in order to return said value of the measured flow-rate to said preset theoretical value.

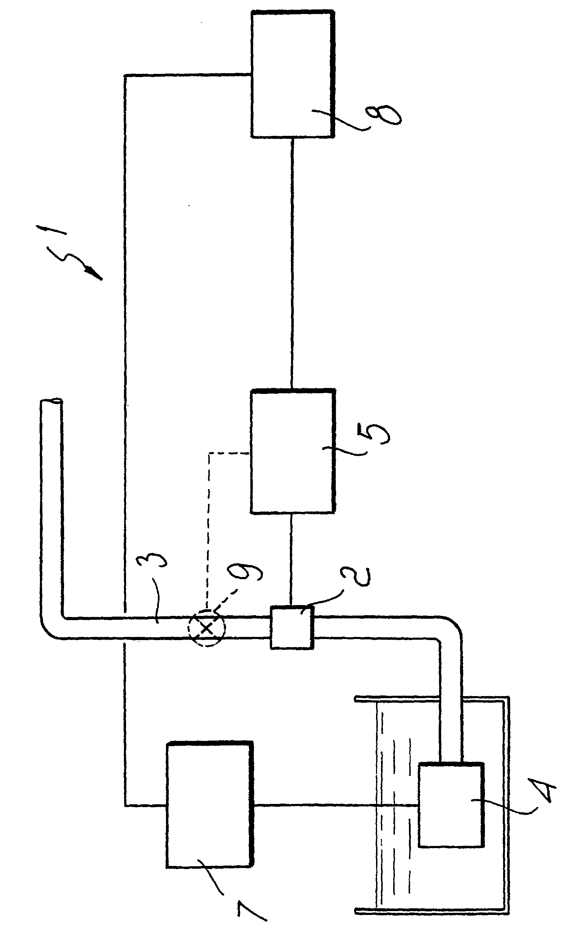

Further characteristics and advantages of the invention will become better apparent from the following description of a preferred but not exclusive embodiment of the device according to the invention, illustrated only by way of non-limitative example in the accompanying drawings, wherein the only figure is a schematic view of the device according to the invention.

With reference to the above figure, the device according to the invention, generally designated by the reference numeral 1, comprises a flowmeter 2 which is applied to the delivery duct 3 of a pump 4 that feeds the abrasive mixture to the gang saw. The flowmeter 2 is connected to an electronic monitoring and actuation element 5 suitable to compare the value of the flow-rate measured by the flowmeter 2 with a theoretical value which is preset in said electronic monitoring and actuation device 5. The device according to the invention also comprises an element for varying the flow-rate of the mixture pumped along the delivery duct 3, and said flow-rate variation element is operatively connected to the electronic monitoring and actuation element 5.

The electronic monitoring and actuation element 5 intervenes, outside a presettable tolerance range, on the flow-rate variation element in the presence of a difference between the value of the flow-rate measured by the flowmeter 2 and the preset value in order to return the value of the measured flow-rate to said preset theoretical value.

More particularly, the flowmeter 2 is of the non-invasive type, in that it can be fitted externally with respect to the delivery duct 3. The flowmeter 2 is preferably constituted by a conventional type of Doppler-effect flowmeter, i.e., a flowmeter provided with a sensor applied to the delivery duct 3 and acting as ultrasound emitter and receiver. The ultrasound waves emitted by said sensor, by encountering suspended solid particles and bubbles in the mixture that flows in the delivery duct 3, are reflected toward the sensor that emitted them. Due to the movement of the solid particles and of the gas bubbles that have reflected the ultrasound waves, said waves return to the sensor with a different frequency than the one with which they had been emitted (Doppler effect). The difference between the emission frequency and the receiving frequency is a function of the speed with which the liquid moves inside the delivery duct 3, and therefore allows the flowmeter 2 to perform an extremely precise measurement of the flow-rate of liquid along the delivery duct 3.

The flowmeter can also be constituted by a so-called "transit-time" flowmeter (ultrasound measurement device) of a conventional type.

The electronic monitoring and actuation element 5 can be constituted by a computer or a PLC which is connected, by means of one of its inputs, to the flowmeter 2. The electronic monitoring and actuation element 5 is programmed to compare the value of the flow-rate measured by the flowmeter 2 with a theoretical value which is preset in the electronic monitoring and actuation element 5 and to act on the flow-rate variation element according to the difference between the flow-rate value measured by the flowmeter 2 and said preset theoretical flow-rate value.

The flow-rate variation element can be constituted, if the pump 4 is operated by means of a variable-speed electric motor 7, by an inverter 8 which is driven by the electronic monitoring and actuation element 5.

As an alternative, the flow-rate variation element, as shown in dashed lines in the accompanying figure, can be constituted by a motorized throttling valve 9 which is arranged along the delivery duct 3 and is driven by the electronic monitoring and actuation element 5.

The operation of the device according to the invention is as follows.

The electronic monitoring and actuation element 5 is preset by entering one or more theoretical flow-rate values which are optimum for the operation of the gang saw according to the parameters that influence the operation of the gang saw, such as for example the material being cut, the penetration of the blades in the block of material, the number of blades or the thicknesses of the slabs to be obtained, etcetera.

Essentially, a theoretical flow-rate value which is optimum for the operation of the gang saw can be associated, inside the electronic monitoring and actuation element 5, with each operating condition of the gang saw.

It is also possible to set in the electronic monitoring and actuation element 5 a tolerance range as regards the difference between the value of the flow-rate measured by the flowmeter 2 and the preset theoretical flow-rate value, so that the monitoring and actuation element 5 intervenes on the flow-rate variation element, constituted by the throttling valve 9 or by the inverter 8, only when said difference is outside said tolerance range.

During the operation of the gang saw, the flowmeter 2 constantly measures the flow-rate of the abrasive mixture that flows in the delivery duct 3 and transmits this flow-rate value to the monitoring and actuation element 5.

The monitoring and actuation element 5 performs a comparison between the value of the flow-rate measured by the flowmeter 2 and the preset theoretical flow-rate value. If such difference is outside the tolerance range, the monitoring and actuation element 5 acts on the inverter 8 or on the throttling valve 9, varying the flow-rate that flows along the delivery duct 3 in order to return it to the preset theoretical flow-rate value.

In this manner, the flow-rate of abrasive mixture being delivered in the cutting region of the blades of the gang saw is constantly monitored and kept at a value which is optimum for the operation of the gang saw.

In practice it has been found that the device according to the invention fully achieves the intended aim, since it allows to automatically monitor and adjust the flow-rate of the abrasive mixture for gang saws for cutting granite, stone or the like, achieving optimum operation for the gang saw.

Another advantage of the device according to the invention is that it allows the minimum necessary utilization of the pump and therefore a longer life of said pump.

Another advantage of the device according to the invention is that it can be applied very rapidly to already-installed gang saws.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for monitoring and adjusting the flow-rate of an abrasive mixture for gang saws for cutting granite, stone or the like, comprising: a flowmeter applied to the delivery duct of a pump that feeds the abrasive mixture of the gang saw, an electronic monitoring and actuation element which is connected, by means of one of its inputs, to said flowmeter and is adapted to compare the value of the flow-rate measured by said flowmeter with a preset theoretical value, an element for varying the flow-rate of mixture pumped along said delivery duct, which is operatively connected to said monitoring and actuation device; said monitoring and actuation device intervening, outside a presettable tolerance range, on said flow-rate variation element in the presence of a difference between the value of the flow-rate measured by said flowmeter and said preset theoretical value in order to return said value of the measured flow-rate to said preset theoretical value.

2. The device according to claim 1, **characterized in that** said flowmeter is of the noninvasive type and is applied externally to the pump delivery duct.

3. The device according to claims 1 and 2, **characterized in that** said flowmeter is a Doppler-effect measurement device.

4. The device according to claims 1 and 2, **characterized in that** said flowmeter is a so-called "transit-time" flowmeter (ultrasound measurement device).

5. The device according to one or more of the preceding claims, **characterized in that** said flow-rate variation element is constituted by a motorized throttling valve which is actuated by said monitoring and actuation element and is arranged along said pump delivery duct.

6. The device according to one or more of the preceding claims, **characterized in that** said pump is actuated by means of a variable-speed electric motor, said flow-rate variation element comprising an inverter which actuates said electric motor and is driven by said monitoring and actuation element.

7. The device according to one or more of the preceding claims, **characterized in that** said monitoring and actuation element comprises a computer.

8. The device according to one or more of the preceding claims, **characterized in that** said monitoring and actuation element comprises a PLC.

## Patentansprüche

1. Einrichtung zum Überwachen und Einstellen der Durchflußrate eines Abrasivgemisches für Gattersägen zum Schneiden von Granit, Gestein oder dergleichen, umfassend: einen Durchflußmesser, der an der Zuführleitung einer Pumpe angebracht wird, die das Abrasivgemisch der Gattersäge zuführt, ein elektronisches Überwachungs- und Betätigungselement, das über einen seiner Eingänge mit dem genannten Durchflußmesser verbunden und dazu geeignet ist, den von dem genannten Durchflußmesser gemessenen Wert der Durchflußrate mit einem voreingestellten theoretischen Wert zu vergleichen, ein Element zum Ändern der Durchflußrate des Gemisches, das entlang der genannten Zuführleitung gepumpt wird, wobei das Element betriebsmäßig mit dem genannten Überwachungs- und Betätigungselement verbunden ist, wobei das genannte Überwachungs- und Betätigungselement außerhalb eines voreinstellbaren Toleranzbereiches in das genannte Element zum Ändern der Durchflußrate eingreift, wenn ein Unterschied zwischen dem Wert der von dem genannten Durchflußmesser gemessenen Durchflußrate und dem genannten voreingestellten theoretischen Wert vorhanden ist, um den genannten Wert der gemessenen Durchflußrate auf den genannten voreingestellten theoretischen Wert zurückzusetzen.

2. Einrichtung nach Anspruch 1, **dadurch gekennzeichnet, daß** der genannte Durchflußmesser vom nicht-invasiven Typ ist und außen an der Zurührleitung der Pumpe angebracht wird.

3. Einrichtung nach den Ansprüchen 1 und 2, **dadurch gekennzeichnet, daß** der genannte Durchflußmesser eine mit Doppler-Effekt arbeitende Meßvorrichtung ist.

4. Einrichtung nach den Ansprüchen 1 und 2, **dadurch gekennzeichnet, daß** der genannte Durchflußmesser ein sogenannter "Laufzeit"-Durchflußmesser (Ultraschallmeßvorrichtung) ist.

5. Einrichtung nach einem oder mehreren der vorhergehenden Ansprüche, **dadurch gekennzeichnet, daß** das genannte Element zum Ändern der Durchflußrate aus einem motorisierten Drosselventil gebildet ist, das von dem genannten Überwachungs- und Betätigungselement betätigt wird und entlang der genannten Zuführleitung der Pumpe angeordnet ist

6. Einrichtung nach einem oder mehreren der vorhergehenden Ansprüche, **dadurch gekennzeichnet, daß** die genannte Pumpe durch einen Elektromotor mit veränderlicher Drehzahl betätigt wird, wobei das Element zum Ändern der Durchflußrate einen Inverter enthält, der den genannten Elektromotor betätigt und von dem genannten Überwachungs- und Betätigungselement angetrieben wird.

7. Einrichtung nach einem oder mehreren der vorhergehenden Ansprüche, **dadurch gekennzeichnet, daß** das genannte Überwachungs- und Betätigungselement einen Rechner enthält.

8. Einrichtung nach einem oder mehreren der vorhergehenden Ansprüche, **dadurch gekennzeichnet, daß** das genannte Oberwachungs- und Betätigungselement eine speicherprogrammierbare Steuerung enthält.

## Revendications

1. Dispositif destiné à surveiller et à contrôler le débit d'un mélange abrasif approprié pour les cadres de scies dont l'objectif est de couper du granit, de la pierre ou des matières similaires, lequel dispositif comprend : un débitmètre appliqué à la conduite de refoulement d'une pompe qui alimente le mélange abrasif du cadre de scie, un élément de surveillance et de commande électronique qui est branché, au moins de l'une de ses entrées, sur ledit débitmètre et il est adapté pour procéder à la comparaison de la valeur du débit mesurée par ledit débitmètre avec la valeur théorique présélectionnée, un élément destiné à faire varier le débit du mélange pompé le long de la conduite de refoulement qui, pour son fonctionnement, est branchée sur ledit dispositif de surveillance et de commande ; ledit dispositif de surveillance et de commande intervient, à l'extérieur. d'une plage de tolérance présélectionnable, sur ledit élément de variation du débit en présence d'une différence entre la valeur du débit mesurée par ledit débitmètre et la valeur dite théorique présélectionnée afin de replacer ladite valeur du débit mesurée à la valeur théorétique présélectionnée.

2. Dispositif selon la revendication 1, **caractérisé en ce que** ledit débitmètre est du type non invasif et il est appliqué, à l'extérieur, sur la conduite de refoulement de la pompe.

3. Dispositif selon les revendications 1 et 2, **caractérisé en ce que** ledit débitmètre est un dispositif de mesures à effet Doppler.

4. Dispositif selon les revendications 1 et 2, **caractérisé en ce que** ledit débitmètre est un débitmètre dit à « temps de transit » (dispositif de mesure aux ultrasons).

5. Dispositif selon l'une ou plusieurs des revendications précédentes, **caractérisé en ce que** ledit élément de variation du débit est composé d'une vanne régulatrice motorisée qui est actionnée par ledit élément de surveillance et de commande et celui-ci est installé le long de la conduite de refoulement de la pompe.

6. Dispositif selon l'une ou plusieurs des revendications précédentes, **caractérisé en ce que** ladite pompe est actionnée au moyen d'un moteur électrique à vitesse variable, ledit élément de variation du débit comportant un convertisseur qui actionne ledit moteur électrique et celui-ci est commandé par ledit élément de surveillance et de commande.

7. Dispositif selon l'une ou plusieurs des revendications précédentes, **caractérisé en ce que** ledit élément de surveillance et de commande comporte un ordinateur.

8. Dispositif selon l'une ou plusieurs des revendications précédentes, **caractérisé en ce que** ledit élément de surveillance et de commande comporte un ordinateur logique programmable.
